# EUROPEAN PATENT APPLICATION

(11) **EP 1 900 510 A2**
(43) Date of publication of application: **19.03.2008**
(21) Application number: 07075812.3
(22) Date of filing: 17.09.2007
(51) Int. Cl.: B32B 7/02, B65D 81/38, C09K 21/00

(54) **Fire protective packaging system and method**

(30) Priority: 15.09.2006 US 521382
(71) Applicant: Greif International Holding BV., 3633 AK Vreeland (NL)
(72) Inventor: Apostoluk, Peter, R., 44134 Parma, Ohio (US)
(74) Representative: Van Gorkom, Lucas Marijn

(57) **Abstract**

A fire protective container includes a sheet of fire protective laminate to form a plurality of faces of the container. The sheet includes a plurality of layers. The plurality of layers includes a flame mitigation layer and a structural layer.

## Description

### FIELD OF THE INVENTION

The present invention generally relates to containers, in particular fire protective containers. More particularly, the present invention pertains to a fire protective container and a method of protecting contents of the container from damage associated with fire and/or heat. Further, the present invention relates to a method of fabricating a fire protective container and a fire protective system using such a container.

### BACKGROUND OF THE INVENTION

Items that are transported or stored are often subjected to unpredictable environments. The items may be placed in close proximity to flammable substances or may pose a flammability risk to other nearby items. For extremely hazardous items, flameproof containers or cabinets are commonly used to store and ship various goods. Such flameproof cabinets are typically made from layers of steel with a separating layer of high temperature insulation.

Disadvantages associated with conventional flameproof cabinets are their great weight, expense, and bulk. As such, their use is generally reserved for only extremely flammable items. Accordingly, it is desirable to provide a container that is capable of overcoming the disadvantages described herein at least to some extent.

### SUMMARY OF THE INVENTION

The foregoing needs are met, to a great extent, by the present invention, wherein in some embodiments a fire protective packaging system is provided.

[An embodiment of the present invention relates to a container including a sheet of fire protective laminate to form a plurality of faces of the container. The sheet includes a plurality of layers. The plurality of layers includes a flame mitigation layer and a structural layer to provide package strength.

In an embodiment of a container according to the invention, the plurality of layers further comprises an activation layer to activate a fire suppression device in response to a fire.

Another embodiment of the present invention pertains to a fire protective system including a fire protective container according to the invention.

Yet another embodiment of the present invention relates to a method of fabricating a fire protective container. In this method, a sheet of fire protective laminate is cut into a blank corresponding to the container, the blank is scored at a plurality of fold locations, and the blank is folded at the plurality of fold locations. The sheet includes a plurality of layers. The plurality of layers includes a flame mitigation layer and a structural layer to provide package strength. The plurality of layers may further include an activation layer to activate a fire suppression device in response to a fire.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

### BRIEF DESCRIPTION OF THE DRAWINGS

FIG. 1 is a block diagram of a container system according to an embodiment of the invention.

FIG. 2 is a simplified diagram of a method of fabricating the container of FIG. 1 and fire protecting an item from fire and heat according to an embodiment of the invention.

FIG. 3 is a block diagram of a container system according to another embodiment of the invention.

### DETAILED DESCRIPTION

The present invention provides, in some embodiments, a fire, flame, or heat resistant box (container) or packaging system, a method of fabricating the box (container), and a method of fabricating the system. For the purpose of this disclosure, a box or container is defined as a receptacle or cover to enclose or partially enclose an item. In an embodiment, the invention provides a box or container comprising two or more layers or coatings that facilitate protecting any contents of the box, or container, and/or nearby items from fire or heat related damage. In another embodiment, the invention provides for a fire protective packaging system that utilizes the box, or container, and co-operates or includes an existing fire suppression system to protect any contents of the box, or container, and/or nearby items from fire or heat related damage. The layers of the container include a fire mitigation layer and a structural layer. The structural layer includes any suitable material such as, for example, fiberboard, metals, fabrics, composites, and the like. For the purpose of this disclosure, the term, "fiberboard" is defined as at least including, for example, paper, paperboard, cardboard, corrugated cardboard, cellulosic, fiberglass, carbon fiber, spun ceramic fibers such as silica-alumina ceramic, and/or resinous material which is similar in character to fiberboard, and which is manipulated in the Same or similar manner as fiberboard. This includes any suitable material capable of being folded from a blank. In this regard, the term "blank" refers to at least a piece or unit of fiberboard that is cut or scored and/or suitable for folding into a particular conformation such as a box, lid, or tube. In addition, the structural layer may be stitched, draped, or molded to generate a container or cover.

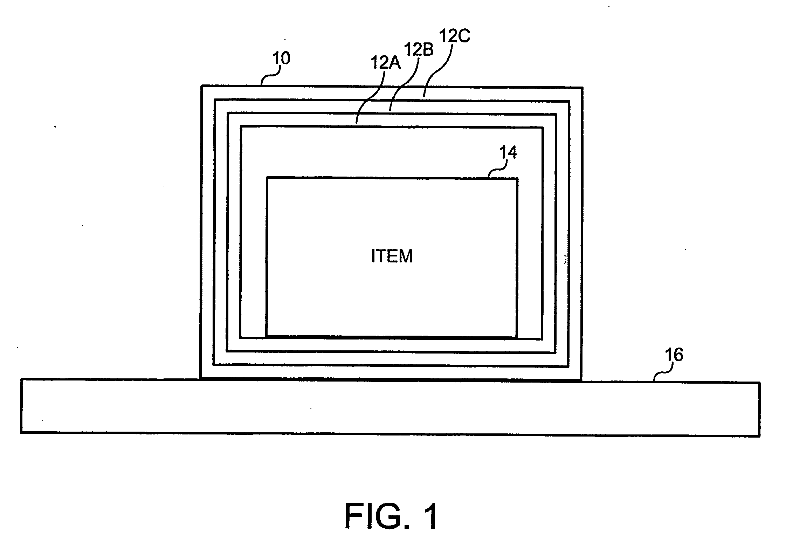

The invention will now be described with reference to the drawing figures, in which like reference numerals refer to like parts throughout. As shown in FIG. 1, a fire protective box or container 10 includes a plurality of layers 12a, 12b and 12c, for example. In various embodiments, any suitable number of layers 12a to 12n may be included in the container 10. Together, the layers 12a-12n, generate a fire protecting barrier that is configured to protect an item 14 disposed within the container 10. In addition, the container 10 may be disposed upon a surface 16 such as a floor or pallet, for example. In another embodiment the plurality of layers comprise an activation layer as will be discussed in more detail below.

The layers 12a-12n may include one or more of fiberboard, laminated fiberboard, coatings, and the like. Suitable coatings include fire resistant and intumescent coatings. In general, fire resistant and intumescent coatings act to mitigate the effects of the fire or heat on underlying layers and, as such, may be described as flame mitigation coatings. In a particular example, the fire resistant coatings include organic or metallic silicates such as silica and vermiculite. In another particular example, the coating includes intumescent materials. These intumescent materials may include a class of materials that swell up int0 a carbonaceous char and a glassy layer in the presence of heat or flame. These carbonaceous char and glassy layers provide a thermally protective layer for any underlying surface. In an example of a preferred embodiment, the intumescent material includes three components: (1) a hydrocarbon with a plurality alcohol groups (e.g., OHCH2- CH2-CH-OH- ...); (2) a source of acid, such as, phosphoric acid and the like); and (3) a blowing agent. Blowing agents include a class of materials that dissociates at high temperatures to give off gases such as nitrogen and carbon dioxide. When a threshold temperature is reached the acid is released, which reacts with the alcohol groups to produce water. The water is released along with the gases when the blowing agent is set off by the predetermined threshold temperature. The evaporation of water is an endothermic process that cools the surroundings and reduces flame propagation.

The flame mitigation coatings may be applied to a substrate, such as the layer 12b, that provides material strength to support the coating. To reduce production and material handling cost, it is an advantage of embodiments, that relatively inexpensive paperboard may provide sufficient strength and flame resistance when appropriately coated. In other embodiments, various other fiberboard layers may be utilized as warranted by the particulars of a given fire protection situation. Optionally, a substantially flameproof layer such as the layer 12c may be utilized to further increase the fire protective qualities of the container 10. In a particular example, a glass fabric or spun ceramic layer may be utilized.

In various embodiments, the container 10 is configured to fire and/or heat protect the item 14 contained therein and/or items in the vicinity. In this regard, depending upon the intent, the layers 12a-12n may be configured to optimize particular characteristics. For example, to protect the item 14 from fire, the layer 12c may include a metallic silicate or intumescent coating, the layer 12b may include a corrugated cardboard layer for rigidity at an economical cost and ease of handling, and layer 12a may include a fiberglass fabric layer for improved strength and fire resistance. Layer 12b thus constitutes or forms part of a structural layer of the container 10, and layer 12a may therefore act as a structural layer and/or a mitigation layer. In another example, the layers 12a-12c may be reversed to protect nearby items in the event that the item 14 poses a potential fire hazard.

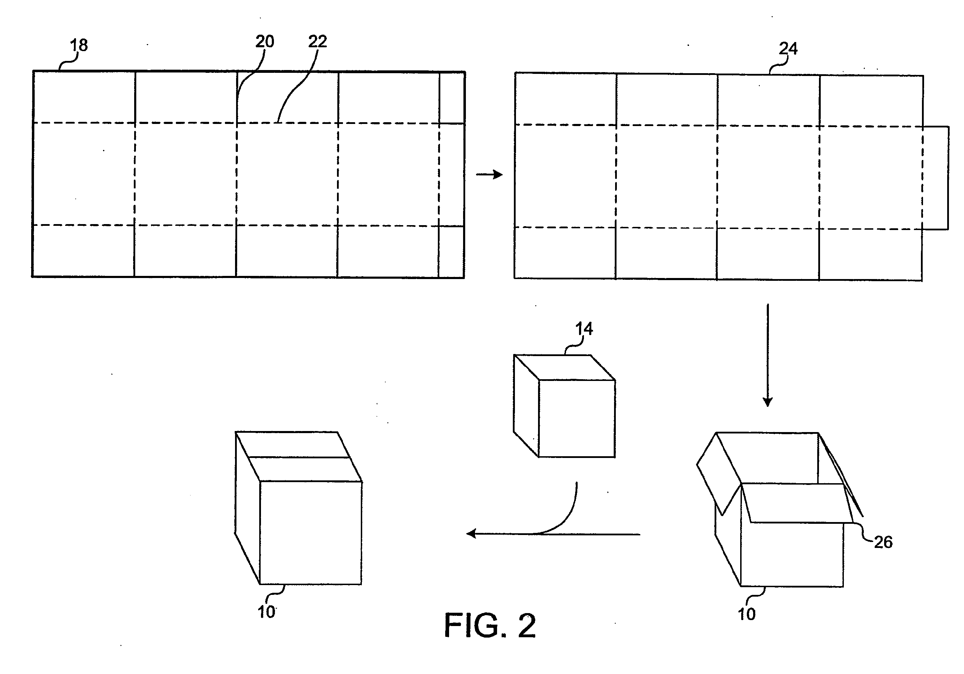

The item 14 may be disposed within the container 10 in any suitable manner. For example, as shown in FIG. 2, the container 10 may be assembled in a manner that resembles a standard cardboard or paperboard box. That is, a sheet stock 18 may be processed in a conventional manner to generate a series of cuts 20 and scores 22 to generate a blank 24. The blank 24 may be folded, glued, stapled, and/or the like to generate the container 10. In a particular example, the contain 10 may include a lid or a plurality of flaps 26 that may be opened to admit the item 14 and closed to seal the item 14 therein. In a preferred embodiment, the container 10 may be stored in a flat or relatively flat conformation and easily assembled into an expanded conformation as needed. In this manner, a ready supply of the container 10 may be stored and/or economically transported. In another preferred embodiment, the container 10 may be utilized to store and/or transport oxygen canisters for use in the airline industry. It is an advantage of embodiments of the invention that the container 10 is light weight, stores in a flat conformation, and is relatively economical compared to conventional fire cabinets.

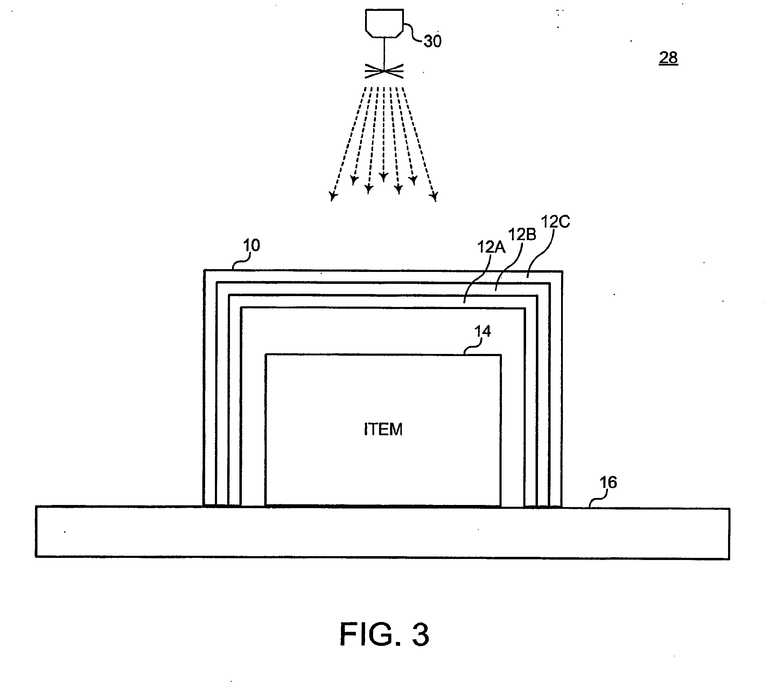

FIG. 3 is a block diagram of a fire protective or container system 28 according to another embodiment of the invention. As shown in FIG. 3, the fire protective system or container system 28 includes a fire suppression device 30 or at least is located in the vicinity of a fire suppression device that may be part of a larger fire suppression arrangement (not shown). The fire suppression device 30 includes any suitable suppression device such as, for example, water sprinkler, C02, dry powder dispenser, foam dispenser, or the like. In a particular example, the fire suppression device 30 includes a heat or smoke activated device. In a preferred embodiment, the layer 12c is configured to readily combust upon contact with flame and bum quickly at a relatively low temperature, such as about 800°F to about 1000°F, while producing essentially no harmful vapors, no toxic gasses. For example, the layer 12c may include a light weight cardboard or paper layer. In this manner, the combustion of the layer 12c may facilitate activation of the fire suppression device 30, as it will more easily combust, i.e. will catch fire at a lower temperature than the underlying layer (substrate) that isfor example made of paperboard or cardboard as described above. This ensures that the layer 12c starts burning relatively fast and that the layer 12c activates the fire suppression device 30. In case the fire suppression device 30 comprises a water sprinkler, it may be advantageous to not only protect the item 14 in the container 10 from the detrimental effects of the fire, but also from the detrimental effects of the item 14 getting wet. This can be achieved for example by providing any of the layers 12a-12c with water-proof, water-resilient or water-resistant properties. It may also be achieved by providing the plurality of layers with an additional layer that has such properties. These properties may for example be achieved by coating one of the layers of the plurality of layers.

In various embodiments, the container 10 may include substantially enclosed containers such as those shown in FIGS. 1 and 2 or may included a covering container as shown in FIG. 3. Such covering may be quickly and easily deployed to cover palletized items, consolidated goods, international bulk containers ("DBCs"), and the like.

The many features and advantages of the invention are apparent from the detailed specification, and thus, it is intended by the appended claims to cover all such invention which fa11 within the true spirit and scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A container comprising:
- a sheet of fire protective laminate to form a plurality of faces of the container, the sheet having a plurality of layers, the plurality of layers includes:
- a flame mitigation layer; and
- a structural layer.

2. The container according to claim 1, wherein the flame mitigation layer comprises a metallic silicate.

3. The container according to claim 1, wherein the flame mitigation layer comprises at least one of carbon fiber, aramid, and glass fabric.

4. The container according to claim 1, wherein the flame mitigation layer is a coating of intumescent material.

5. The container according to any of claims 1 to 4, wherein the structural layer further comprises at least one of a fiberboard layer, corrugated paper layer, and fiber fabric layer.

6. The container according to any of claims 1 to 5, wherein the plurality of faces comprises:
a plurality of side faces; and
an upper face, wherein the container includes a lower opening to facilitate
placement over an item.

7. The container according to any of claims 1 to 5, wherein the plurality of faces comprises:
a plurality of side faces;
a lower face; and
a lid to close the container.

8. The container according to any of claims 1-7, wherein the plurality of layers further comprises an activation layer to activate a fire suppression device in response to a fire.

9. The container according claim 9, wherein the activation layer comprises paper.

10. The container according to claim 9, wherein the paper bums at a lower temperature than that of cardboard.

11. The container according to claim 9 or 10, wherein the paper produces essentially no toxic gasses.

12. The container according to any of claims 1-11, wherein the container is folded from a blank.

13. A fire protective system comprising a container according any of claims 1-12.

14. The fire protective system according to claim 13, wherein the fire protective system further comprises a fire suppression device.

15. A method of fabricating a fire protective container, the method comprising:
- cutting a sheet of fire protective laminate into a blank corresponding to the container, the sheet comprises a plurality of layers, the plurality of layers comprises:
- a flame mitigation layer; and
- a structural layer;
- scoring the blank at a plurality of fold locations; and
- folding the blank at the plurality of fold locations.

16. The method according to claim 15, further comprising:
generating the sheet of fire protective laminate,

17. The method according to claim 15 or 16, further comprising:
coating the structural layer with a metallic silicate.

18. The method according to claim 15 or 16, further comprising:
coating the structural layer with one or more of a carbon fiber, arimid, and fiber glass fabric.

19. The method according to claim 15 or 16, further comprising:
coating the structural layer with an intumescent material.

20. The method according to any of claims 15 to 19, further comprising:
laminating at least one of a fiberboard layer, corrugated paper, and fiber fabric layer to the structural layer.

21. The method according to any of claims 15to 20, further comprising:
laminating an activation layer to the structural layer, wherein the activation layer is configured to activate a fire suppression device in response to a fire.
